# EUROPEAN PATENT APPLICATION

(11) **EP 1 306 265 A1**
(43) Date of publication of application: **02.05.2003**
(21) Application number: 02079371.7
(22) Date of filing: 21.10.2002
(51) Int. Cl.: B60P 1/44, B62D 33/023

(54) **Loading platform for a truck**

(30) Priority: 25.10.2001 IE 20010956
(71) Applicant: Hydrotec Engineering Ltd., Clonmel, Country Tipperary (IE)
(72) Inventor: Dhollander, Nancy Alois, 9111 Sint-Niklaas (BE); Dhollander, Jan Prudence Jozef, 9111 Sint-Niklaas (BE)
(74) Representative: Donné, Eddy

(57) **Abstract**

Loading platform for a truck, comprising at least two platform parts (6,7,8,9,10) which are connected to each other by means of coupling means (13), characterized in that said coupling means (13) at least consist of the combination of, at one hand, mutually engaging profiled portions (18,19,20,21) provided at the edges (16,17) of the platform parts (6,7,8,9,10) and, on the other hand, one or more securing elements (15) provided at said edges (16,17).

## Description

This invention relates to a loading platform for a truck and such.

More particularly, the invention relates to a loading platform which comprises at least two platform parts connected to each other by means of coupling means and which is made in aluminium or another light-weight metal.

Such aluminium loading platforms can be manufactured by means of profiles which are obtained, for example, by an extrusion process. These profiles must be connected to each other in such a manner that a solid unit is obtained which is suspended in a hingeable manner at the loading opening of the truck.

Traditionally, the aluminium profiles are welded to each other, and this unit, at its underside, either is provided with reinforcement ribs or not. This has various disadvantages.

First, the welding of such platforms either has to be carried out by persons which are especially trained to this end, or automatized welding apparatus has to be used, which is expensive. Moreover, this welding is rather energy-consuming, and special assembly techniques have to be applied in order to counteract, for example, the warping of the platforms. Also, after welding, a lot of welding spatters will remain, which have to be removed.

Also, loading platforms are known which are constructed of platform parts which are connected to each other by means of coupling means, more particularly by having the platform parts engage after each other behind their edges. With this type of loading platform, it is also known that, at some distance from the edges, elements may be slid into the hollow platform parts, whereby through these elements and the bottom wall of the platform parts, a connection is realized with reinforcement profiles situated at the underside of the loading platform.

The present invention aims at a loading platform of the type which comprises platform parts with edges engaging into each other and which in many aspects is improved in comparison to the embodiments known up to now.

To this aim, the invention consists of a loading platform which comprises at least two platform parts coupled to each other by means of coupling means, whereby said coupling means at least consist in the combination of, on one hand, profiled portions provided at the edges of the platform parts, which portions engage into each other, and, on the other hand, one or more securing elements which are provided at said edges.

Due to the fact that, according to the invention, securing elements are applied which are situated at the edges of the successive platform parts, a particularly efficient locking between the platform parts is obtained.

Preferably, the securing element, securing elements, respectively, cooperate with both platform parts coupled by means of the engagement, more particularly cooperate with the profiled portions, engaging one behind the other, of the edges of both platform portions. As the securing elements cooperate directly with both platform parts, as well as with the mutually engaging profiled portions, the additional advantage is offered that a particularly solid coupling is created.

Preferably, the aforementioned profiled portions are realized such that the successive platform parts can be coupled laterally to each other by bringing them with their edges towards each other. In this manner, the successive platform parts can be connected to each other in a more simple manner than this is the case when, for example, a platform part must be slid into another platform part according to a direction parallel to the edges to be coupled. Moreover, this latter way of mounting requires more space.

Still preferably, the profiled portions are realized such that, in their mutually engaged condition, they offer a locking between two successive platform parts which is free of play or approximately free of play, horizontally as well as vertically, such that the locking becomes even stronger.

In a preferred form of embodiment, the profiled portions are realized such that the platform parts can be fixed by snapping them into each other at their edges. This offers the advantage that the platform parts are locked in mutual respect already by themselves. Therefore, together with the securing elements, so to speak, a double securing is created. Due to the snap-on effect, it is already known during mounting whether platform parts are fitted faultlessly into one another, and a faulty mounting is excluded.

In still another preferred form of embodiment, the profiled portions are realized such that the platform parts can be inserted into each other by means of a turning movement, which allows for an easy mounting.

In a practical form of embodiment, at the upper side, at the edges of the platform parts to be coupled, profiled portions are provided which fit into each other exclusively by means of a turning movement, whereas at the lower side of these edges, profiled portions are provided with locking portions which engage behind each other by means of a turning movement, more particularly, snap on.

Preferably, the profiled portions comprise portions engaging elastically one behind the other, more particularly lips, and the securing element, securing elements, respectively, prevents, prevent, respectively, the movement of said portions, as a result of which a solid securing is obtained.

Still preferably, the platform parts, together with the securing elements, are attached, by means of fixation means, such as bolts, rivets or such, through a bottom wall of the platform parts, to one or more reinforcement profiles, such that a reinforcement is obtained which is better than in the case that only the platform parts are attached to the reinforcement profiles.

In a preferred form of embodiment, the securing elements consist of elements which can be slid in longitudinal direction between the edges of the platform parts, more particularly in the shape of one or more profiles.

In still another preferred form of embodiment, the platform parts are extruded aluminium profiles.

With the intention of better showing the characteristics of the invention, hereafter, as an example without any limitative character, a preferred form of embodiment is described, with reference to the accompanying drawings, wherein:
Figure 1 represents a part of a truck with a loading platform according to the invention;
figure 2, at a larger scale, represents a cross-section according to line II-II in figure 1;
figure 3 represents the loading platform from figure 2 in dismounted condition;
figures 4 to 7 schematically and in cross-section represent different steps of the mounting of a loading platform according to the invention;
figure 8, at a larger scale, represents a cross-section according to line VIII-VIII in figure 7;
figure 9, in cross-section, represents a variant of the invention;
figure 10 represents the part indicated by F10 in figure 9, in dismounted condition;
figure 11 represents the unit from figure 10 in mounted condition;
figure 12, at a larger scale, represents a cross-section according to line XII-XII in figure 9.

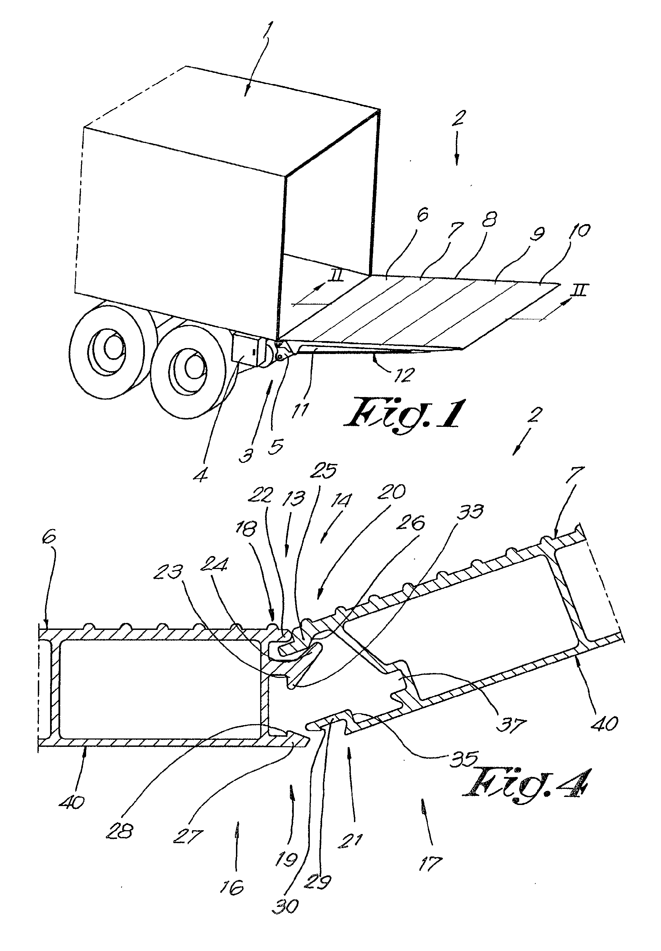

In figure 1, a truck 1 is represented which is equipped with a loading platform 2 according to the invention. this loading platform 2 is fixed at the truck 1 by means of a hinge connection 3. By means of not-represented driving cylinders, which can be controlled by means of a control panel 4, the loading platform 4 can be lifted and lowered.

As is represented more detailed in figure 2, the loading platform 2, apart from a portion 5 comprising the hinge connection 3, comprises, in this case, five platform parts 6, 7, 8, 9 and 10. Underneath the five platform parts 6-10, at a distance from each other, two hollow reinforcement profiles 11 are attached which, as represented, are closed off preferably by means of a cover 12.

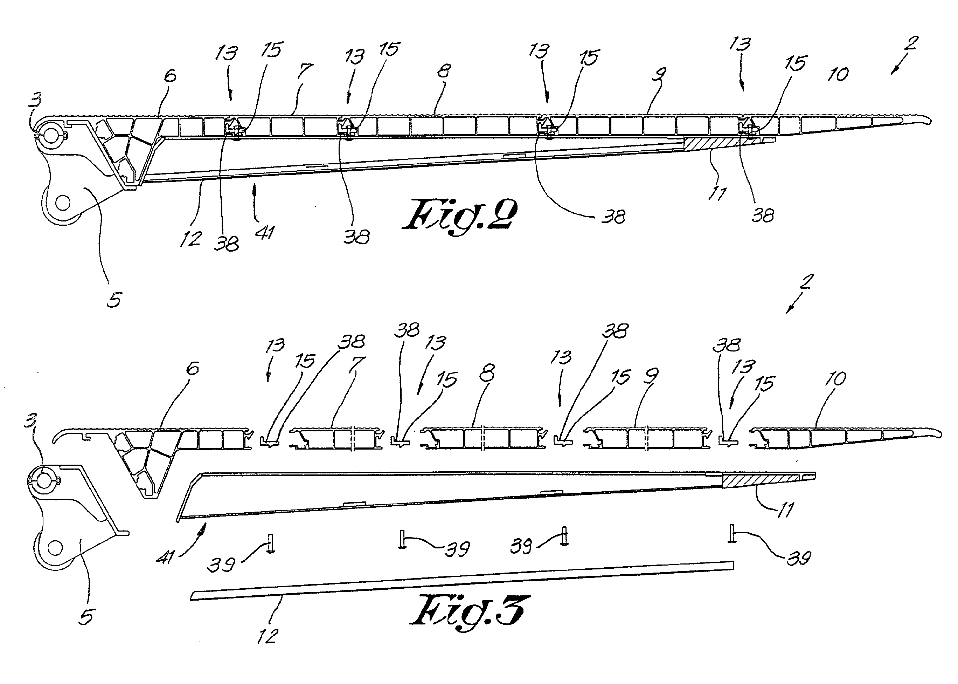

Figure 3 represents the loading platform 2, whereby the platform parts 6 to 10 thereof, one of the reinforcement profiles 11 and the pertaining cover 12 are dismounted.

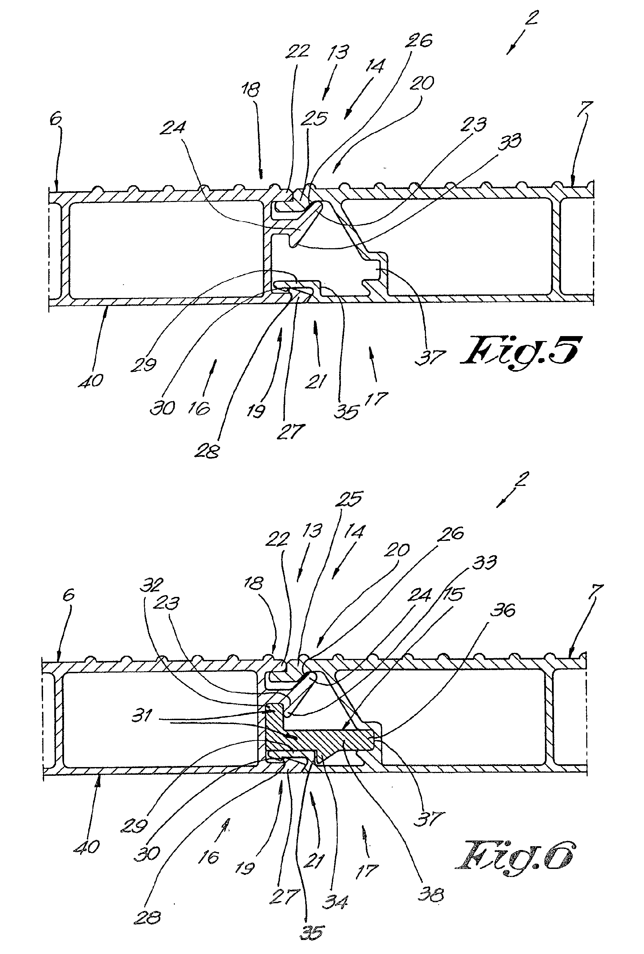

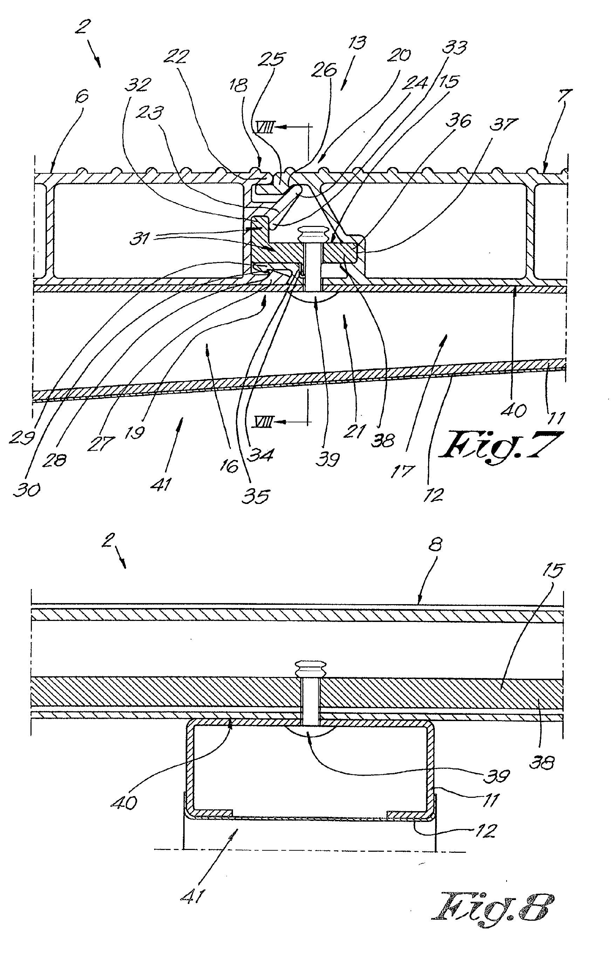

In the figures 4 to 7, the edge portions of two successive platform parts, more particularly of the platform parts 7 and 8, are represented in cross-section for different positions, including coupling means 13, by which the platform parts 7-8 are connected. These coupling means 13 consist, on one hand, of coupling means which are realized in one piece with the platform parts 7 and 8 and globally are indicated by reference 14, and, on the other hand, one or more securing elements 15. The aforementioned coupling parts 14 form a connection between the edges 16 and 17, which are situated against each other, of the platform parts 7 and 8 and are formed by profiled portions 18 and 19 on the upper side of edge 16, the lower side thereof, respectively, as well as profiled portions 20 and 21, on the upper side of edge 17, the lower side thereof, respectively.

The profiled portion 18 on the upper side of edge 16 of the platform portion 7 consists of laterally protruding lips 22 and 23 which are situated at an interspace and one above the other, the lowermost lip 23 of which comprises an upwardly directed locking portion 24.

The profiled portion 20 on the upper side of edge 17 of the platform part 8 consists of a lip 25 which fits between the two lips 22 and 23 of the profiled portions 18 and which comprises a downwardly directed locking portion 26 which can cooperate with said upwardly directed locking portion 24.

The profiled portion 19 at the lower side of the edge 16 of the platform part 7 consists of a laterally protruding lip 27 with a hook-shaped locking portion 28. The profiled portion 21 at the lower side of edge 17 of the platform part 8 consists of a laterally protruding lip 29 comprising a hook-shaped locking part 30. Both locking portions 28 and 30 can snap on and engage behind each other, due to the elastic bending of at least one of the aforementioned lips 27 or 29.

The securing elements 15 comprise locking portions 31 which provide for an engagement behind both edges 16 and 17 of the coupled platform parts 7 and 8, as a result of which a locking in the plane of the loading platform 2 is obtained. These locking portions 31 comprise a collar 32 which, in mounted condition, is situated behind a downwardly protruding portion 33 of the lip 23, as well as a protruding portion 34 which cooperates with a transverse wall portion 35 at the height of lip 29.

Further, the securing element 15 comprises an edge 36 which, in mounted condition, is seated in a recess 37 in the edge 17 of the platform part 8.

Also, the securing elements 15, as explained in the following, preferably comprise one or more portions which realize a securing effect according to a direction perpendicular to the plane of the loading platform 2.

One of the lips 27 or 29, lip 27 in the example of the figures, is realized thicker or, more generally spoken, more rigid than the other, such that, when snapping on the respective profiled portions 19 and 21 behind each other, the least rigid lip 29 performs an elastic displacement. The portion of the securing element 15 which delivers a securing effect according to a direction transverse to the plane of the loading platform 2, consists of a portion which, in mounted condition, prevents the movement of the least rigid lip 29 and, in this case, is formed by the basic body 38 of the securing element 15 and by the collar 32 formed thereon, which are dimensioned such that they are precisely seated between the lip 23 and the elastically bendable lip 29.

In the form of embodiment represented in the figures, the securing and the locking, seen in cross-section, are performed by means of one and the same securing element 15, however, it is clear that to this end, several securing elements 15 can be used. Preferably, such securing element 15 consists of a profile extending over the entire width, or approximately the entire width, of the loading platform 2.

The platform parts 6 to 10, together with the securing elements 15, are attached to said reinforcement profiles 11 by means of fixation elements 39 through the lower walls 40 of the platform parts 6 to 10. In the represented example, these fixation elements 39 are rivets, more particularly rivets of the type which can be provided by means of blind riveting, however, it is clear that to this end, other fixation elements can be applied as well, such as bolts, screws and the like.

It is clear that, in the cross-section of figure 8, instead of only one fixation element 39, also, for example, two fixation elements 39 next to each other can be provided.

The reinforcement profiles 11 substantially are U-shaped with an open side 41 which is directed away from the platform parts 6 to 10. In this manner, the rivets or other fixation elements 39 can easily be applied.

In the example of the figures, the aforementioned open side 41 of such reinforcement profile 11 is covered by means of the aforementioned cover 12. Thereby, the optical view is improved and dirt accumulation is counteracted. Possibly, the cover 12 may be omitted, without leaving the scope of the invention.

Although normally two reinforcement profiles 11 will be applied, it is not excluded to work with only one reinforcement profile 11 or with more than two reinforcement profiles. Also, it is not excluded to construct the loading platform 2 without such reinforcement profile 11, whereby the fixation elements 39 for the securing elements 15 then, for example, cooperate exclusively with the lower wall 40 of the respective platform part 6 to 10 and/or with a reinforcement element 11 provided locally underneath the loading platform 2.

As represented in figures 4 to 8, such loading platform 2 can easily be composed as follows.

The platform parts 6 to 10 are coupled laterally to each other by bringing them with their edges 16 and 17 towards each other. Hereby, respectively two successive platform parts 6 to 10 are snapped-on into each other by means of a turning movement.

As a consequence thereof, the lip 25 of a platform part 7 to 10 respectively becomes situated between the lips 22 and 23 of the preceding platform part 6 to 9, such that the downwardly directed locking portion 26 of the lip 25 and the upwardly directed locking portion 24 of the lip 23 cooperate with each other. On the other hand, the hook-shaped locking portion 28 of the lip 27 and the hook-shaped locking portion 30 of the lip 29 snap on, as the less rigid lip 29 is elastically bent by the more rigid lip 27.

Of course, also a connection is realized between the platform part 6 and the portion 5, which connection can be of any kind.

Subsequently, the securing elements 15 respectively are slid between two subsequent platform parts 6 to 10. Thereafter, the reinforcement profile 11 is attached against the lower walls 38 of the platform parts 6 to 10, after which, by means of fixation elements 39, the securing elements 15, the platform parts 6 to 10 and the reinforcement profiles 11 are attached to each other. Finally, the covers 12 are provided over the reinforcement profiles 11 and attached thereto, for example, by means of not-represented screws.

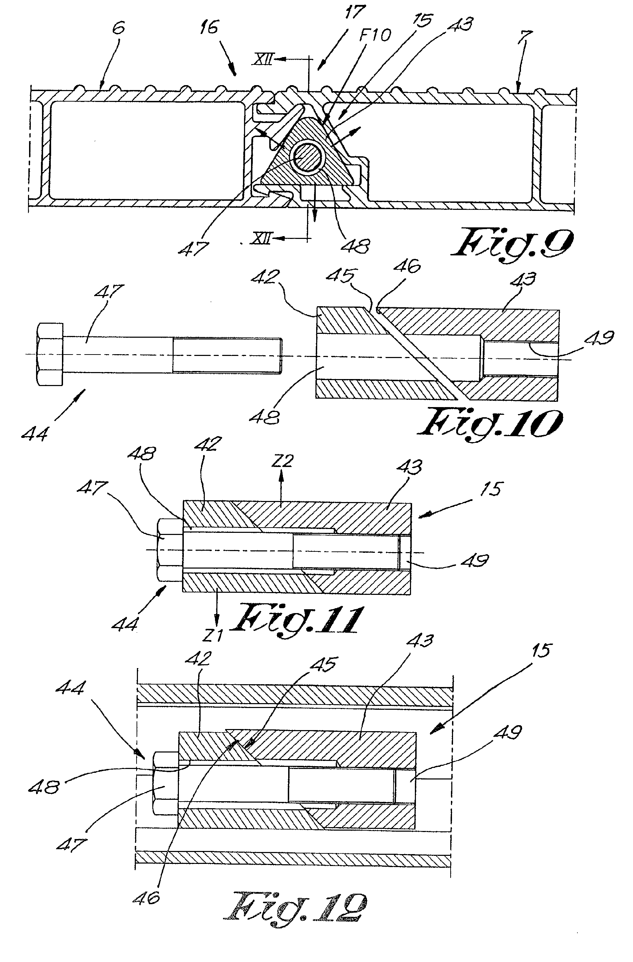

In figure 9, a variant is represented whereby use is made of a securing element 15 which is realized as an expansible element, with which a tensioning force between different portions of the edges 16-17 of the platform parts, in this case, 6-7, can be realized.

As represented in figures 10 and 11, such securing element 15 consists of at least two portions 42-43 and tensioning means 44 with which these portions 42-43 can be drawn towards each other, whereby said two portions 42-43 are provided with contact planes 45-46 which provide for that the portions 42-43, when tensioning the tensioning means 44, are forced away from each other in transverse direction, such as indicated by arrows Z1 and Z2 in figure 11, respectively.

In this case, the tensioning means 44 consist of a bolt 47, the bolt body of which fits freely through a spaciously dimensioned opening 48 in the portion 42 and which engages in the portion 43, in an opening 49 provided with screw thread.

The use of the securing elements 15 from figures 10 and 11 is explained hereafter, with reference to figures 9 and 12.

When mounting the loading platform 2, one or more of such securing elements 15 are slid laterally between the edges 16-17, as can be seen in figure 9. By subsequently tensioning the corresponding bolt 47, the portions 42 and 43 tend to shift away from each other according to arrows Z1 and Z2, with as a consequence that the securing element 15, so to speak, expands and a tensioning force between the different walls and profiled portions at the edges 16-17 is realized. The shifting in mutual respect is illustrated schematically in figure 12. In reality, this shifting will be rather small.

In the case of a form of embodiment as represented in figures 9 to 12, in practice preferably at least two securing elements 15 will be applied, which are provided along opposite sides of the loading platform 2.

It is obvious that according to the invention, also other forms of expansible elements can be applied.

The platform parts 6 to 10 may, for example, be obtained by extrusion. The reinforcement profiles 11 may be manufactured of steel or another material.

The present invention is in no way limited to the form of embodiment described by way of example and represented in the figures, on the contrary may such loading platform be realized in different forms and dimensions, without leaving the scope of the invention.

## Claims

1. Loading platform for a truck, comprising at least two platform parts (6,7,8,9,10) which are connected to each other by means of coupling means (13), **characterized in that** said coupling means (13) at least consist of the combination of, at one hand, mutually engaging profiled portions (18,19,20,21) provided at the edges (16,17) of the platform parts (6,7,8,9,10) and, on the other hand, one or more securing elements (15) provided at said edges (16,17).

2. Loading platform according to claim 1, **characterized in that** said securing element (15), said securing elements (15), respectively, cooperate with the two platform parts (6,7,8,9,10) coupled by means of the engagement effect, more particularly, are contacting these parts.

3. Loading platform according to claim 1 or 2, **characterized in that** said profiled portions (18,19,20,21) have a configuration which allows to couple the successive platform parts (6,7,8,9,10) laterally to each other by bringing them with their edges (16,17) towards each other.

4. Loading platform according to any of the preceding claims, **characterized in that** the profiled portions (18,19,20,21) have a configuration which is such that, in engaged condition, they offer a locking between two successive platform parts (6,7,8,9,10), horizontally as well as vertically, which locking is free of play or approximately free of play.

5. Loading platform according to any of the preceding claims, **characterized in that** the profiled portions (18,19,20,21) are made such that the platform parts (6,7,8,9,10) can be snapped into each other at their edges (16,17).

6. Loading platform according to any of the preceding claims, **characterized in that** the profiled portions (18,19,20,21) are made such that the platform parts (6,7,8,9,10) can be engaged into each other by means of a turning movement.

7. Loading platform according to claims 5 and 6, **characterized in that** the platform parts (6,7,8,9,10) are provided with edges (16,17) at which, at the upper side, profiled portions (18,20) are provided which fit into each other exclusively by means of a turning movement, whereas at the lower side of these edges (16,17), profiled portions (19,21) are provided with locking portions (28,30) which engage one behind the other by means of a turning movement.

8. Loading platform according to claim 7, **characterized in that** the profiled portions (18,20) situated at the upper side consist of, on one hand, laterally protruding lips (22,23) formed at a first platform part (6,7,8,9) and situated at an interspace one above the other, whereby the lowermost lip (23) thereof comprises an upwardly directed locking portion (24), and, on the other hand, a lip (25) formed at the second platform part (7,8,9,10) which fits between the aforementioned two lips (22,23) and which comprises a downwardly directed locking portion (26) which can cooperate with said upwardly directed locking portion (24).

9. Loading platform according to claim 7 or 8, **characterized in that** the profiled portions (19,21) situated at the lower side consist of, on one hand, at a first platform part (6,7,8,9), a laterally protruding lip (27) having a hook-shaped locking portion (28) and, on the other hand, at the second platform part (7,8,9,10), a laterally protruding lip (29) which also comprises a hook-shaped locking portion (30), which locking portions (28,30), as a consequence of the elastic bending of at least one of said lips (27,29), can snap and engage behind one another.

10. Loading platform according to any of the preceding claims, **characterized in that** the securing elements (15) comprise locking portions (31) which realize a locking in the plane of the loading platform (2).

11. Loading platform according to any of the preceding claims, **characterized in that** the securing elements (15) comprise one or more portions which realize a securing effect according to a direction perpendicular to the plane of the loading platform (2).

12. Loading platform according to any of the preceding claims, **characterized in that** the profiled portions (18,19,20,21) comprise portions engaging behind one another, more particularly lips (27,29), and that the securing element, securing elements (15), respectively, prevents, prevent, respectively, the movement of said portions (27,29).

13. Loading platform according to any of the preceding claims, **characterized in that** the securing elements (15) consist of elements which can be slid in longitudinal direction between the edges (16,17) of the platform parts (6,7,8,9,10).

14. Loading platform according to claim 13, **characterized in that** the securing element, the securing elements (15), respectively, are made in the shape of one or more profiles.

15. Loading platform according to any of the preceding claims, **characterized in that** the securing elements (15) are made as expansible elements, with which a tensioning force between different portions of the edges (16 and/or 17) of the platform parts (6,7,8,9,10) can be realized.

16. Loading platform according to claim 15, **characterized in that** the securing elements (15) consist of at least two portions (42-43) and tensioning means (44) with which these portions (42-43) can be drawn towards one another, whereby said two portions (42-43) are provided with contact planes (45-46) providing for that said two portions (42-43), when tensioning the tensioning means (44), are forced in transverse direction away from each other.

17. Loading platform according to any of the preceding claims, **characterized in that** the platform parts (6,7,8,9,10), together with the securing elements (15), are fixed by means of attachment means (39), such as bolts, rivets or such, through bottom walls (40) of the platform parts (6,7,8,9,10) to one or more reinforcement profiles (11).

18. Loading platform according to claim 17, **characterized in that** said reinforcement profiles (11) substantially are U-shaped, whereby these are directed with their open sides (41) away from the platform parts (6,7,8,9,10) and possibly are covered by means of a cover (12).
